# EUROPÄISCHE PATENTSCHRIFT

(11) **EP 3 876 026 B1**
(45) Veröffentlichungstag und Bekanntmachung des Hinweises auf die Patenterteilung: **03.09.2025**
(21) Anmeldenummer: 20161349.4
(22) Anmeldetag: 06.03.2020
(51) Int. Cl.: G02C 13/00

(54) **VERFAHREN UND VORRICHTUNGEN ZUM BESTIMMEN DES VORNEIGUNGSWINKELS**
METHOD AND DEVICES FOR DETERMINING INCLINATION ANGLE
PROCÉDÉ ET DISPOSITIFS DE DÉTERMINATION DE L'ANGLE D'INCLINAISON

(43) Veröffentlichungstag der Anmeldung: 08.09.2021
(73) Patentinhaber: Carl Zeiss Vision International GmbH, 73430 Aalen (DE)
(72) Erfinder: GAMPERLING, Michael, 89340 Leipheim (DE); SCHWARZ, Oliver, 73479 Ellwangen (DE)
(74) Vertreter: Kraus & Lederer PartGmbB

(56) Entgegenhaltungen:
- WO-A1-2018/138149
- WO-A1-2019/002460
- DE-A1- 102007 020 031
- FR-A1- 2 971 860
- JP-A- 2015 085 163
- US-A1- 2004 189 935

## Beschreibung

Die vorliegende Anmeldung betrifft Verfahren und Vorrichtungen zum Bestimmen des Vorneigungswinkels.

Der Vorneigungswinkel gehört zu den sogenannten Zentrierparametern. Zentrierparameter werden benutzt, um Brillengläser korrekt in einer Brillenfassung anzuordnen bzw. zu zentrieren, sodass die Brillengläser in korrekter Position relativ zu den Augen der die Brille tragenden Person angeordnet sind. Dabei handelt es sich zum Teil um anatomische Parameter der betreffenden Person, wie beispielsweise den Pupillenabstand, zum Teil um rein fassungsspezifische Parameter wie die Fassungsscheibenbreite oder die Fassungsscheibenhöhe und zum Teil um Kombinationen aus anatomischen Parametern, wie beispielsweise den Hornhautscheitelabstand und die Durchblickshöhe. Einen Überblick über einige gängige Zentrierparameter gibt die DIN EN ISO 13666:2012 unter Punkt 5. Der Vorneigungswinkel ist dabei unter Punkt 5.18 dieser Norm definiert.

Bei neueren Zentriergeräten, wie sie beispielsweise in der WO 2018/138206 A1 der Anmelderin beschrieben sind, werden hierfür mehrere Bildaufnahmen eines Kopfes einer Person, während die Person die Brillenfassung trägt, aufgenommen, umfassend eine Frontaufnahme, d.h. eine Aufnahme von vorne auf das Gesicht der Person, und eine oder mehrere seitliche Aufnahmen. Aus diesen Bildaufnahmen werden dann Zentrierparameter bestimmt. Hierfür können Bilderkennungsverfahren wie in der obigen Anmeldung beschrieben zum Einsatz kommen, mit welchen beispielsweise eine Brillenfassung sowie Lagen der Augen, insbesondere der Pupillen, in den Bildern identifiziert werden und hieraus Zentrierparameter bestimmt werden. Zusätzlich oder alternativ zu einem automatischen Erkennen durch Bildverarbeitung können auch Benutzereingaben erfolgen, um beispielsweise die Lage einer automatisch erkannten Fassung oder automatisch erkannten Pupille durch einen manuellen Eingriff zu korrigieren oder von vornherein vorzugeben.

Um die Bestimmung der Lage eine Brillenfassung in Bildaufnahmen zu erleichtern, werden bei manchen Herangehensweisen Markierungseinrichtungen benutzt, die an der Brillenfassung angebracht werden und die auch als Messbügel bezeichnet werden. Derartige Messbügel sind beispielsweise aus der US 10,101,598 B2, der US 10,130,252 B2 und der US 2009/0207375 A1 bekannt. Weitere Verfahren zur Zentrierparameterbestimmung und zum Einschleifen von Linsen sind aus der US 2010/157243 A1, US 2010/253906 A1, US 2011/128495 A1, US 2013/314668 A1, US 2014/148707 A1, US 8,182,089 B2, US 8,419,183 B2, US 8,506,078 B2, US 8,857,986 B2, US 9,116,365 B2, US 9,316,489 B2, US 9,699,123 B2, US 9,726,903 B2 oder der

US 9,726,911 B2 bekannt. Insbesondere zur Bestimmung der Vorneigung sind derartige Messbügel hilfreich, da bedingt durch die Form von Brillenfassungen, die üblicherweise nicht genau eine Rechteckform für die einzelnen Glasränder aufweisen, perspektivische Verzerrungen der Neigung auftreten können, insbesondere wenn eine Bildaufnahme nicht genau von der Seite erfolgt.

Auf der anderen Seite können derartige Messbügel für eine Person, die die Brillenfassung trägt, störend sein und auch dazu führen, dass sie eine unnatürliche Kopfhaltung bei der Zentriermessung einnimmt, was wiederum die Bestimmung der Zentrierparameter verfälschen kann.

Auch die WO 03/079097 A1 verwendet Registriermarkierungen an einer Brillenfassung und benötigt zudem exakte Seitenansichten. Exakte Seitenansichten, d.h. Aufnahmen genau von der Seite, erfordern jedoch eine sehr präzise Positionierung des Kopfes der Person, die die Brillenfassung trägt, was wiederum zu einer unnatürlichen Kopfhaltung führen kann.

Daher ist es ausgehend von den oben genannten Druckschriften, die Messbügel verwenden, eine Aufgabe, Verfahren und Vorrichtungen zur Bestimmung des Vorneigungswinkels bereitzustellen, welche keinen Messbügel benötigen und welche auch bei einer ungenauen Positionierung eines Kopfes, bei der keine exakten Seitenbildaufnahmen vorliegen, verglichen mit dem Stand der Technik eine genauere Bestimmung ermöglichen. Aus der JP 2015 085163 ist bekannt, den Vorneigungswinkel mittels eines seitlichen Bildes der Brillenfassung zu bestimmen.

Diese Aufgabe wird gelöst durch ein computerimplementiertes Verfahren gemäß Anspruch 1, 8 oder 10 sowie eine Vorrichtung nach Anspruch 15 und ein Computerprogramm nach Anspruch 14. Die Unteransprüche definieren weitere Ausführungsformen.

Gemäß einem ersten Erfindungsaspekt wird ein computerimplementiertes Verfahren zum Bestimmen eines Vorneigungswinkels bereitgestellt, umfassend Aufnehmen mindestens eines seitlichen Bildes eines Kopfes einer Person, die eine Brillenfassung trägt, und Annotieren eines vertikalen Glasrandes in dem mindestens einen seitlichen Bild. Das Verfahren ist gekennzeichnet durch ein Bestimmen des Vorneigungswinkels basierend auf einer angenommenen Annotationslinie und dem annotierten Glasrand. Auf diese Weise kann eine Genauigkeit bei der Bestimmung des Vorneigungswinkels erhöht werden.

Die oben verwendeten Begriffe werden nun erläutert.

Für Richtungsangaben von Bildaufnahmen des Kopfes wird die Konvention verwendet, dass eine Bildaufnahme in dorsale Richtung senkrecht zur Frontalebene als 0° und eine Aufnahme in eine Richtung parallel zur Frontalebene und senkrecht zur Sagittalebene als 90° bzw. 270° bezeichnet wird. Die Bezeichnungen Sagittalebene, Frontalebene, dorsal, ventral und später auch temporal und nasal werden dabei wie in der Anatomie üblich verwendet, eine Übersicht hierfür findet sich beispielsweise in dem Wikipedia Artikel "anatomische Lage- und Richtungsbezeichnungen", Stand 12. Dezember 2019.

Eine Frontalansicht oder ein Frontbild entspricht also einer Bildaufnahme oder Ansicht in der 0°-Richtung, während eine exakte Seitenansicht oder ein Seitenbild eine Ansicht oder Bildaufnahme in der 90°-Richtung oder 270°-Richtung entspricht.

Wie eingangs erläutert ist es schwierig, eine exakte Seitenansicht sicherzustellen. Unter einem seitlichen Bild wird daher ein Seitenbild mit einer gewissen Toleranz verstanden, welches beispielsweise aus einer Richtung zwischen 70° und 90°, insbesondere zwischen 75° und 85°, beispielsweise etwa 80°, aufgenommen werden kann, oder - auf der anderen Seite - aus einer Richtung zwischen 270° und 290°, insbesondere zwischen 275° und 285°, beispielsweise etwa bei 280°, aufgenommen werden kann. Es handelt sich also um eine Aufnahme, die nicht exakt von der Seite, sondern leicht von schräg vorne aufgenommen wird. Bei manchen Ausführungsbeispielen können mehrere solcher seitlicher Bildaufnahmen, insbesondere auch in Kombination mit weiteren Bildaufnahmen einschließlich einer Frontaufnahme (aus der 0°-Richtung) erfolgen.

Unter einem Annotieren wird ein Festlegen einer Linie in einem oder mehreren Bildern verstanden, die eine bestimmte Komponente der Brille, insbesondere der Brillenfassung, in dem Bild kennzeichnet.

Der Begriff Glasrand ist gleichbedeutend mit einem inneren Rand der Brillenfassung, auch als Fassungsrand bezeichnet, zu verstehen. Der Begriff vertikaler Glasrand bezieht sich auf einen in Gebrauchsstellung von der Brillenfassung von oben nach unten verlaufenden Rand, entweder auf einer temporalen oder nasalen Seite des Fassungsrandes der jeweiligen Brillenfassung. Hierfür werden später in der Figurenbeschreibung auch noch Beispiele gegeben. Ein derartiges Annotieren kann automatisiert durch Bilderkennung, benutzergestützt oder durch eine Kombination beider Möglichkeiten, indem durch eine automatische Bilderkennung eine Annotationslinie vorgeschlagen wird und dann ein Benutzer diese Linie manuell korrigieren kann, erfolgen. Dies kann wie in dem eingangs erläuterten Stand der Technik geschehen. Derartige Annotationstechniken sind beispielsweise zur Bestimmung des Hornhautscheitelabstandes, aber auch zur Bestimmung anderer Zentrierparameter im Zeiss Visufit 1000, Stand Dezember 2019, wie auf der Website https://www.zeiss.de/vision-care/fueraugenoptiker/produkte/instruments-technology/visufit-1000-zentriergeraet-von-zeiss.html beschrieben, realisiert.

Benutzerinteraktionen wie das Annotieren von Linien werden dabei über eine entsprechende Benutzerschnittstelle beispielsweise eines Computers vorgenommen, bevorzugt eine grafische Benutzerschnittstelle (Graphical User Interface; GUI).

Da bei einer seitlichen Bildaufnahme der temporale Glasrand näher an der Kamera ist als der nasale Glasrand, wird dabei häufig der temporale Glasrand annotiert, da dieser häufig besser zu erkennen ist.

Unter einer angenommenen Annotationslinie wird eine Annotationslinie relativ zu einer Form des Glasrandes der Brillenfassung verstanden. Diese angenommene Annotationslinie weist dabei insbesondere in einer Frontansicht der Brillenfassung einen bekannten Winkel zur Senkrechten, d.h. einer vertikalen Linie, auf. Für die Berechnung der Brillenfassung wird angenommen, dass die angenommene Annotationslinie dem annotierten vertikalen Glasrand entspricht. Dies bedeutet beispielsweise, dass der in der seitlichen Ansicht annotierte vertikale Glasrand in einer Frontansicht mit der angenommenen Annotationslinie übereinstimmt. Beispiele werden weiter unten erläutert. Je nachdem, wie der vertikale Glasrand tatsächlich annotiert wird, kann der annotierte vertikale Glasrand exakt oder weniger exakt mit der angenommenen Annotationslinie übereinstimmen.

Dem Verfahren liegt dabei die Überlegung zugrunde, dass bei einer horizontalen seitlichen Ansicht, bei der die Blickrichtung nicht in einer Glasebene der Brillengläser verläuft, durch schräg verlaufende Glasränder eine perspektivische Verzerrung auftritt, die zu Abweichungen zwischen dem annotierten vertikalen Glasrand und dem Vorneigungswinkel führt. In anderen Worten wäre für den Vorneigungswinkel eine vertikale Begrenzung des Kastensystems gemäß DIN EN ISO 13666: 2012 5.1 maßgeblich, während der annotierte vertikale Glasrand einer in einem Winkel hierzu stehenden Linie entspricht. Mittels der angenommenen Annotationslinie kann die hierdurch entstehende Winkelabweichung korrigiert werden, da für die angenommene Annotationslinie der Winkel zwischen der vertikalen Begrenzung des Kastensystems und der angenommenen Annotationslinie bekannt ist und bei der angenommenen Übereinstimmung dieser Winkel auch für den annotierten vertikalen Glasrand gilt.

Insbesondere wird ein Winkel zwischen der angenommenen Annotationslinie und der vertikalen Begrenzung des Kastensystems auch als Winkel zwischen dem annotierten vertikalen Glasrand und einer vertikalen Begrenzung des Kastensystems angenommen. Wird dieser Winkel als α bezeichnet und ist ein Winkel β ein Winkel, unter dem die seitliche Bildaufnahme zu einer Normalenrichtung auf der Glasebene der Brillengläser (d.h. der Winkel in Normalenrichtung wäre 0°) erfolgt (beispielsweise 85°) kann ein Korrekturwinkel α' zu α' = α * cos(β) berechnet werden. Um diesen Korrekturwinkel α' wird dann ein Vorneigungswinkel, der dem Winkel des annotierten vertikalen Glasrandes entspricht, korrigiert. Wie bereits erläutert kann das Annotieren auch vollautomatisch erfolgen.

Bei einem Ausführungsbeispiel ist die angenommene Annotationslinie eine Tangente an dem Glasrand bei einem Schnittpunkt des Glasrandes mit der horizontalen Mittellinie gemäß DIN EN ISO 13666:2012 5.2, insbesondere an einer temporalen Seite des Glasrandes, wenn der temporale vertikale Glasrand annotiert wird. Bei einem anderen Ausführungsbeispiel kann als angenommene Annotationslinie eine Linie verwendet werden, die Punkte auf dem Glasrand verbindet, die Schnittpunkte des Glasrandes mit Linien, die im Winkel von z.B. 45° zu der horizontalen Mittellinie von dem geometrischen Mittelpunkt des Kastensystems gemäß 5.5 der DIN EN ISO 13666:2012 ausgehen, sind. Bei noch einem anderen Ausführungsbeispiel kann eine Linie verwendet werden, die Punkte auf dem Glasrand verbindet, an denen Tangenten an dem Glasrand unter einem bestimmten Winkel, z.B. 45°, mit der horizontalen Mittellinie bzw. vertikalen oder horizontalen Begrenzungslinien der Glasebene einschließt. Es kann auch eine Linie verwendet werden, die als Neigung einen Mittelwert von zwei der oder allen dreien der oben genannten Möglichkeiten aufweist. Diese angenommenen Annotationslinien können auf einfache Weise bestimmt werden. Diese Annotationslinien können beispielsweise auf Basis einer Information über die Form des Glasrandes, welche für eine bestimmte Brillenfassung beispielsweise vom Hersteller bereitgestellt werden kann, oder auch aus einer Frontaufnahme der Person, die die Brillenfassung trägt, ermittelt werden. Dieses Ermitteln kann auch automatisch durch Bilderkennung geschehen, sodass das Verfahren insgesamt vollautomatisch oder auch unterstützt durch Benutzer auf Eingaben durchgeführt werden kann.

Bei anderen Ausführungsbeispielen kann die angenommene Annotationslinie mit Verfahren des maschinellen Lernens ermittelt werden, beispielsweise mit einem trainierten neuronalen Netzwerk, siehe Wikipedia Artikel "Maschinelles Lernen" vom 16. Dezember 2019. Als Trainingsdaten können hierzu eine Vielzahl von Annotationslinien für verschiedene Formen von Glasrändern verwendet werden, bei denen durch Messungen, beispielsweise Auswertung einer Vielzahl von Bildaufnahmen aus verschiedenen Richtungen, festgestellt wird, wie der von einem Benutzer oder automatisch annotierte vertikale Glasrand relativ zu einer vertikalen Linie des Kastensystems verläuft. Zusätzlich oder alternativ kann ein Training durch Auswerten einer Vielzahl von seitlichen Bildern erfolgen. Die Bilder werden dabei beispielsweise immer mit der gleichen Perspektive, d.h. immer unter dem gleichen Winkel (z.B. 80°) mit einem Zentriersystem erstellt und manuell annotiert.

Bei weiteren Ausführungsbeispielen kann auch noch eine konkrete dreidimensionale Form der Brillengläser herangezogen werden. Dies kann insbesondere bei Sport- oder Schutzbrillen relevant sein, bei welchen die Gläser gleichsam um den Kopf herum gezogen werden, sodass sie nicht mehr durch eine einzige Ebene angenähert werden können. Bei solchen Fällen kann die übliche Definition des Vorneigungswinkels wegen der großen Abweichung der Flächen der Brillengläser von einer Ebene unpraktikabel sein. Stattdessen können in diesem Fall beispielsweise Winkel von Tangenten an den Brillengläsern verwendet werden, beispielsweise im Durchblickpunkt gemäß 5.11 der DIN EN ISO 13666:2012. Alternativ kann auch auf eine Kurve zurückgegriffen werden, die den Fassungsrand beschreibt, und/oder weitere Parameter, die die Glasfläche betreffen, wie sphärischer Radius, horizontaler/vertikaler Radius, zusammen mit der die Neigung einer Tangentenebene an die Glasflächen im Durchblickpunkt, die in diesem Fall den Vorneigungswinkel definieren kann.

Bei einem weiteren Aspekt wird ein computerimplementiertes Verfahren zum Bestimmen eines Vorneigungswinkels bereitgestellt, umfassend:
Aufnehmen mindestens eines seitlichen Bildes eines Kopfes einer Person, die eine Brillenfassung trägt, und Annotieren eines vertikalen Glasrandes in dem mindestens einen seitlichen Bild. Gekennzeichnet ist das Verfahren dadurch, dass das Annotieren des vertikalen Glasrandes ein Annotieren eines temporalen vertikalen Glasrandes und eines nasalen vertikalen Glasrandes umfasst, und dass das Verfahren weiter ein Bestimmen der Vorneigung basierend auf dem annotierten temporalen Glasrand und dem annotierten nasalen Glaswand umfasst.

Wie bereits beim ersten Aspekt erläutert kann es durch perspektivische Verzerrungen passieren, dass ein annotierter Glasrand nicht den tatsächlichen Vorneigungswinkel widerspiegelt. Indem sowohl der temporale Glasrand als auch der nasale Glasrand herangezogen werden, kann der Effekt ausgeglichen werden. Insbesondere kann der Vorneigungswinkel hierzu auf einer Mittelung zwischen einem Winkel, der sich aus dem annotierten nasalen Glasrand ergibt, und einem Winkel, der sich aus dem temporalen Glasrand ergibt, ergeben. Hierdurch kann eine Steigerung der Genauigkeit erreicht werden. Insbesondere sind die Neigungen des temporalen Glasrandes und des nasalen Glasrandes in einer Frontansicht auf die Brillenfassung bei vielen Fassungen in entgegengesetzten Richtungen zur Senkrechten, sodass sich durch Mittelung ein Vorneigungswinkel ergeben kann, der nahe an einem Vorneigungswinkel bei Benutzung der vertikalen Begrenzung des Kastensystems oder einer Linie parallel hierzu ergeben würde.

Gemäß einem dritten Aspekt wird ein computerimplementiertes Verfahren zum Bestimmen eines Vorneigungswinkels bereitgestellt, umfassend:
Aufnehmen mindestens eines seitlichen Bildes eines Kopfes einer Person, die eine Brillenfassung trägt, und
Bestimmen einer Repräsentation der Brillenfassung. Gekennzeichnet ist das Verfahren durch ein Überlagern der Repräsentation und einer Bilddarstellung auf Basis des mindestens einen seitlichen Bildes, und Anpassen der Repräsentation an die Bilddarstellung. Ein Vorneigungswinkel kann dann auf Basis der angepassten Repräsentation bestimmt werden.

Unter einer Repräsentation der Brillenfassung ist dabei ein virtuelles, d.h. in einem Speicher eines Rechners, erstelltes Objekt zu verstehen, das die Brillenfassung, einen Teil hiervon oder eine Lage hiervon repräsentiert. Durch das Anpassen der Repräsentation an die Bilddarstellung kann die Lage der Repräsentation entsprechend der Lage der Brillenfassung in der Bilddarstellung angepasst werden und hieraus der Vorneigungswinkel bestimmt werden.

Bei einem Ausführungsbeispiel ist die Repräsentation ein Modell der Brillenfassung oder eines Teils hiervon. Unter einem Modell der Brillenfassung ist dabei eine mathematische und/oder geometrische Beschreibung der Brillenfassung, insbesondere des Fassungsrandes hiervon, zu verstehen. Dabei ist als Modell der Brillenfassung ein Modell des Fassungsrandes, d.h. der dreidimensionale Verlauf der Fassungsrandkurve, ausreichend. Derartige Modelle sind beispielsweise in der WO 2018/138258 A1 erläutert. Weitere Verfahren, die sich auf Modelle von Brillenfassungen beziehen, sind aus der US 2015/0055085 A1 oder der WO 2019/007939 A1 bekannt. Durch die Verwendung eines Modells der Brillenfassung ist eine intuitive Anpassung möglich.

Ausgehend beispielsweise von der in der EP 3 355 102 A1 beschriebenen Herangehensweise zur Identifikation eines Fassungsrandes in einem Bild kann dann ein entsprechendes Modell der Brillenfassung bestimmt werden, wobei Parameter wie Position in X-, Y- und Z-Richtung an einem Kopf, Kopfdrehung um eine vertikale Achse, Scheibenlänge, Scheibenbreite und Vorneigungswinkel und Fassungsscheibenwinkel wie in DIN EN ISO 13666:2012 definiert bestimmt werden. Die vertikale Achse kann dabei z.B. durch den Atlaswirbel der Person oder durch eine Mitte zwischen den Positionen der Augen, definiert durch die Pupillenpositionen bei Geradeausblick oder zwischen den Augendrehpunkten (COR, Center of Rotation) der Augen. Bei anderen Ausführungsbeispielen kann ein Fassungsrand in einem Frontbild auch manuell markiert werden, und der so bestimmte Fassungsrand als Brillenfassungsmodell verwendet werden. Das so bestimmte Brillenfassungsmodell wird von dann einem oder mehreren Bildern überlagert, insbesondere dem mindestens einen seitlichen Bild, optional auch zusätzlich anderen Bildern wie einem Frontbild, sodass der Benutzer oder auch ein Computerprogramm mittels eines Optimierungsverfahrens die Übereinstimmung zwischen dem realen Fassungsrand in dem Bild und dem Modell prüfen kann. Bei einem solchen Optimierungsverfahren kann beispielsweise ein Unterschied zwischen dem Modell und dem realen Fassungsrand minimiert werden.

Bei einem Ausführungsbeispiel werden hierzu einer oder mehrere der oben genannten Parameter iterativ variiert. Nach jedem Durchlauf wird die Abweichung der durch den aktuellen Parametersatz sich ergebenden Modell-Randkurve von der Randkurve der aufgesetzten Fassung in einem oder mehreren der Bilder bewertet. Ziel ist es, durch Variation der Parameter einen solchen Parametersatz zu finden, der diese Abweichungen minimiert. Es können also herkömmliche, iterative Optimierungsverfahren verwendet werden. Verschiedene Kostenfunktionen (z.B. Summe der Beträge der Abweichungen, quadratische Summe derselben, etc.) können dabei zum Einsatz kommen. Unter einer Kostenfunktion ist dabei bei Optimierungsverfahren eine Funktion zu verstehen, deren Wert minimiert werden soll. In den obigen Beispielen wird durch das Optimierungsverfahren also beispielsweise die Summe der Beträge der Abweichungen, oder die quadratische Summe derselben minimiert.

Dann kann das Modell der Brillenfassung angepasst werden, beispielsweise hinsichtlich Vorneigungswinkel, Fassungsscheibenwinkel, Krümmung der Brillengläser in vertikale und horizontale Richtung, wobei erstere in einer seitlichen Ansicht und zweitere in einer Ansicht von oben sichtbar wäre, wobei die Anpassung der Parameter nicht auf diese Parameter beschränkt ist. Auf Basis des angepassten Modells wird dann der Vorneigungswinkel bestimmt. Dies kann auch iterativ erfolgen, sodass nach Anpassung eines Parameters das Modell des Fassungsrandes neu bestimmt wird und dann wieder eine Überlagerung angezeigt wird, welche dann wieder angepasst werden kann. So kann iterativ die korrekte Lage des Modells entsprechend den Bildaufnahmen eingestellt werden und basierend hierauf der Vorneigungswinkel bestimmt werden.

In einem anderen Ausführungsbeispiel ist die Repräsentation eine Strecke, welche die Lage des Fassungsrandes insbesondere hinsichtlich der Vorneigung repräsentiert.

Eine solche Strecke kann ähnlich des bei dem ersten und zweiten Aspekt bestimmten annotierten vertikalen Glasrandes durch Bilderkennung bestimmt werden und perspektivisch korrigiert überlagert dargestellt werden. Für diese perspektivische Korrektur werden bei einem Ausführungsbeispiel ausgehend von einer angenommenen 3D Position von Punkten im Raum, die den Fassungsrand repräsentieren, deren Position im Bild, in Analogie zur Fotografie, auf eine 2D Ebene "projiziert". Es wird also in einer Ebene "markiert", wo diese Punkte wie bei einer Kamera in die Bildebene abgebildet würden. Weicht nun in der perspektivischen Überlagerung die zunächst angenommene Kameraposition von der zur Überlagerung nötigen ab, wird die Position des virtuellen Beobachters in die passende Position "bewegt", und dann die Punkte auf der Bildebene erneut markiert. Die Transformation der zuerst markierten Punkte in die im zweiten Fall markierten Punkte ist die erwähnte "perspektivische Korrektur".

Ziel dieser Korrektur ist es, eine virtuelle Position eines virtuellen Betrachters eines virtuellen Objektes an die Position im Raum zu bewegen, an der sich die Kamera befand, die das andere Bild der Überlagerung, in diesem Fall beispielsweise das seitliche Bild, aufgenommen hat.

Diese projizierte Strecke kann dann wiederum an eine in einer seitlichen Bildaufnahme annotierte Strecke in der seitlichen Bildaufnahme angepasst werden, wobei durch das Anpassen Parameter wie Vorneigungswinkel, Fassungsscheibenwinkel, und Scheibenkrümmung wie oben erläutert angepasst werden können. Dies kann mittels eines Optimierungsverfahren erfolgen, bei dem eine Kostenfunktion minimiert wird, die Distanz und Winkeldifferenz der projizierten Strecke und der annotierten Linie als Parameter aufweist. Dabei können herkömmliche Optimierungsverfahren zum Einsatz kommen, bei denen bei jeder Iteration des Optimierungsverfahrens die projizierte Strecke und die annotierte Linie verglichen wird (um z.B. Distanz und Winkeldifferenz zu bestimmen) und der Vergleich durch die Kostenfunktion, die in dem Beispiel eine Funktion (quadratisch, linear, absoluter Betrag etc.) von Distanz und Winkeldifferenz sein kann, bewertet wird. Durch eine derartige Optimierung kann das Verfahren weitergehend automatisiert werden.

Durch die verschiedenen oben diskutierten Aspekte kann eine höhere Genauigkeit bei der Bestimmung des Vorneigungswinkels erreicht werden, auch wenn kein exaktes Seitenbild vorliegt.

Die obigen Verfahren können für die linke und die rechte Seite separat durchgeführt werden, indem zwei seitliche Aufnahmen, eine von jeder Seite, benutzt werden.

Entsprechende Vorrichtungen, welche Mittel zur Durchführung der oben beschriebenen Verfahrensschritte enthalten, und Computerprogramme werden ebenfalls bereitgestellt.

Der mit den oben beschriebenen Verfahren und Vorrichtungen bestimmte Vorneigungswinkel kann dann zum Einschleifen von Brillengläsern verwendet werden.

Die Erfindung wird nachfolgend anhand von bevorzugten Ausführungsbeispielen unter Bezugnahme auf die beigefügten Zeichnungen noch näher erläutert. Es zeigen:
Fig. 1A eine Vorrichtung zum Bestimmen des Vorneigungswinkels gemäß einem Ausführungsbeispiel,
Fig. 1B ein Beispiel für eine Implementierung einer Kameraeinrichtung der Fig. 1A,
Fig. 2 eine Darstellung einer Brillenfassung zur Erläuterung verwendeter Begriffe,
Fig. 3 eine seitliche Bildaufnahme zur Erläuterung mancher Ausführungsbeispiele,
Fig. 4A eine schematische Frontansicht eines Brillenglases und Fig. 4B eine entsprechende Seitenansicht, die zu Erläuterungszwecken verwendet werden,
Fig. 5 ein Flussdiagram zur Veranschaulichung eines Verfahrens gemäß einem Ausführungsbeispiel,
Fig. 6 ein Flussdiagram zur Veranschaulichung eines Verfahrens gemäß einem weiteren Ausführungsbeispiel,
Figuren 7A und 7B schematische Frontansichten eines Brillenglases zur Veranschaulichung angenommener Annotationslinien bei manchen Ausführungsbeispielen,
Fig. 8 ein Flussdiagram zur Veranschaulichung eines Verfahrens gemäß weiterer Ausführungsbeispiele, und
Figuren 9A-9D Darstellungen zur Erläuterung des Verfahrens der Fig. 8.

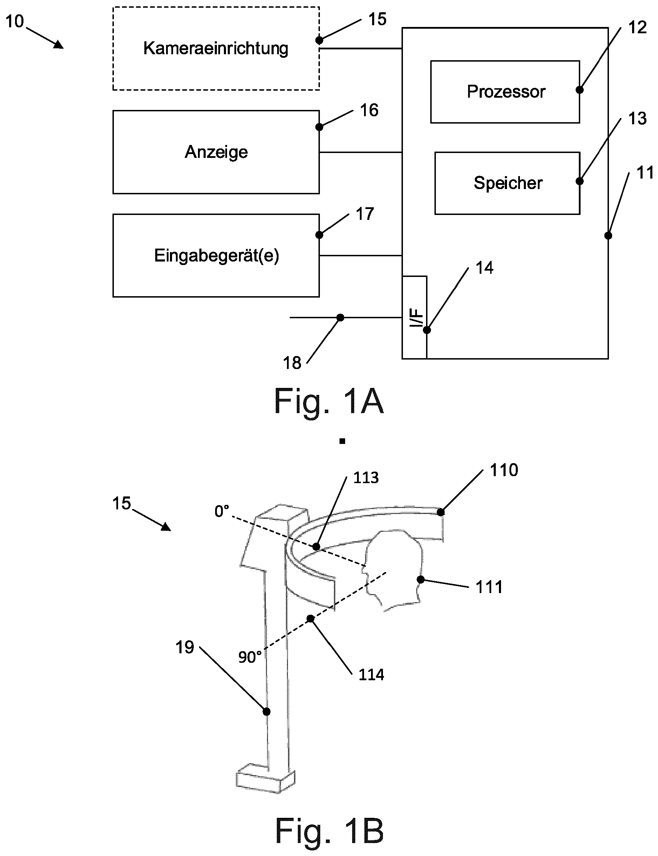

Die Fig. 1A zeigt ein Ausführungsbeispiel einer Vorrichtung 10 zur Bestimmung eines Vorneigungswinkels. Die Vorrichtung 10 der Fig. 1A kann dabei eine Zentriervorrichtung sein, mit der neben dem Vorneigungswinkel auch andere Zentrierparameter bestimmt werden können. Beispielsweise können die nachfolgend beschriebenen in den Vorrichtungen der Figuren 1A und 1B implementierten Verfahren als Erweiterung zu der beispielsweise in der bereits erwähnten WO 2018/138206 A1 der Anmelderin beschriebenen Zentriervorrichtung implementiert werden, insbesondere indem eine Software der Zentriervorrichtung entsprechend angepasst wird.

Die Vorrichtung 10 der Fig. 1A umfasst eine Recheneinrichtung 11, einen Prozessor 12 sowie einen Speicher 13. Der Speicher 13 dient zum Abspeichern von Daten und Programmen und umfasst bei dem Ausführungsbeispiel der Fig. 1A einen Speicher mit wahlfreiem Zugriff (Random Access Memory, RAM), einen Nur-Lese-Speicher (Read Only Memory, ROM) sowie ein oder mehrere Massenspeichermedien (Festplatte, Solid State Disk, SSD, optisches Laufwerk etc.). In dem Speicher 13 ist ein Programm abgelegt, mittels dem, wenn es auf dem Prozessor 12 ausgeführt wird, eine Bestimmung eines Vorneigungswinkels wie oben und weiter unten beschrieben durchgeführt wird.

Die Vorrichtung 10 der Fig. 1A verfügt weiter über eine Anzeige 16, auf welcher beispielsweise Bilder, die von einer Kameraeinrichtung 15 aufgenommen werden, angezeigt werden können. In der Bildaufnahme können dann Linien, insbesondere vertikale Glasränder wie bereits oben beschrieben und wie weiter unten noch näher erläutert, annotiert werden. Hierzu sind ein oder mehrere Eingabegeräte 17, beispielsweise Tastatur und Maus, bereitgestellt. Zusätzlich oder alternativ kann die Anzeige 16 ein berührungsempfindlicher Bildschirm (Touchscreen) sein, um Eingaben direkt am Bildschirm vorzunehmen. Die Vorrichtung 10 kann auch mit mehreren Einzelkomponenten implementiert sein. So kann Beispielsweise zur Bedienung ein Tablet-PC mit dem berührungsempfindlichen Bildschirm 16 bereitgestellt sein, der mit übrigen Komponenten drahtlos oder drahtgebunden kommuniziert. So kann die Recheneinrichtung 11 dann ein Computer sein, der mit dem Tablet-PC kommuniziert.

Die Vorrichtung 10 der Fig. 1A umfasst weiterhin eine Schnittstelle 14 zu einem Netzwerk 18, um Daten empfangen zu können. Hierüber können beispielsweise Daten über eine verwendete Brillenfassung empfangen werden. Bei manchen Ausführungsbeispielen können über die Schnittstelle 14 auch Daten zu einer weiteren Recheneinrichtung gesendet werden, um zumindest einen Teil der hier beschriebenen Verfahren mittels der weiteren Recheneinrichtung durchzuführen.

Die Kameraeinrichtung 15 ist in der Lage, Bilder eines Kopfes einer Person, die eine Brillenfassung trägt, aus verschiedenen Richtungen aufzunehmen, insbesondere aus einer Frontrichtung und aus mindestens einer seitlichen Richtung. Ein Beispiel für die Kameraeinrichtung 15 ist in der Fig. 1B dargestellt. Bei dem Ausführungsbeispiel der Fig. 1B ist eine halbkreisförmige Anordnung 110 von Kameras an einer Säule 19 befestigt. Die Recheneinrichtung 11 der Fig. 1A kann beispielsweise in die Säule 19 eingebaut sein. Eine Person kann sich dann derart hinstellen, dass ein Kopf 111 der Person wie in Fig. 1B gezeigt in der halbkreisförmigen Anordnung unter 10 von Kameras positioniert ist und aus verschiedenen Richtungen aufgenommen werden kann. Insbesondere kann eine Frontansicht aus einer 0°-Richtung, welche mit einer gestrichelten Linie 113 gekennzeichnet ist, und eine seitliche Ansicht aus einer Richtung knapp unter 90°, z.B. 80°, aufgenommen werden. Die 90°-Richtung, die einer genauen Seitenansicht entsprechen würde, ist mit einer Linie 114 gekennzeichnet. Zusätzlich oder alternativ kann eine seitliche Bildaufnahme auch von der anderen Seite erfolgen, was dann einer Richtung zwischen 0° (entsprechend 360°) und 270° entspricht. Für Details für die Kameraeinrichtung der Fig. 1B wird beispielsweise auf die bereits erwähnte WO 2018/138206 A1 der Anmelderin verwiesen, wo eine derartige Kameraeinrichtung detailliert beschrieben ist.

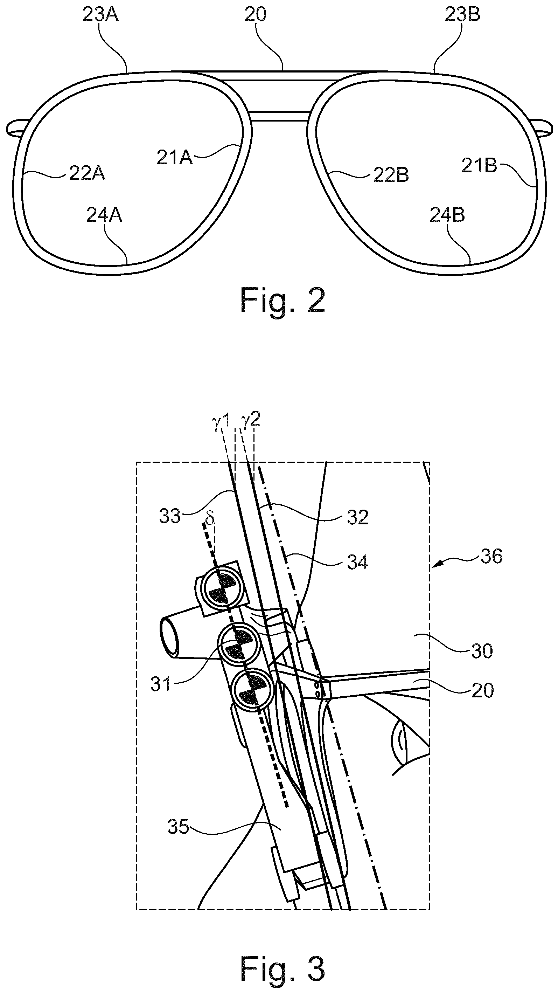

Die Fig. 2 zeigt ein schematisches Beispiel für eine Brillenfassung 20 zur Erläuterung verwendeter Begriffe. Die Brillenfassung 20 weist für das linke Brillenglas einen vertikalen nasalen Glasrand 21A, einen vertikalen temporalen Glasrand 22A, einen horizontalen oberen Glasrand 23A und einen horizontalen unteren Glasrand 24A auf. Entsprechend weist die Brillenfassung für das rechte Brillenglas einen vertikalen nasalen Glasrand 21B, einen vertikalen nasalen temporalen Glasrand 22B, einen horizontalen oberen Glasrand 23B und einen horizontalen unteren Glasrand 24B auf. Die Begriffe "horizontal" und "vertikal" geben dabei den groben Verlauf, jedoch nicht die exakte Richtung wieder, da wie in Fig. 2 zu sehen die Glasränder im Allgemeinen leicht schräg oder gekrümmt verlaufen. In einer exakten Seitenansicht, in der die Blickrichtung der Bildaufnahme in der Glasebene verläuft (90° bzw. 270° bei entsprechender Ausrichtung der Brillengläser) können, wenn die Brillenfassung nicht wie bei manchen Sportbrillen stark gekrümmt ist, die vertikalen Glasränder im Wesentlichen übereinander erscheinen, sodass sie nicht zu unterscheiden sind.

Die Fig. 3 zeigt ein seitliches Bild, wie es beispielsweise aus einer Richtung von etwa 85° mit der Kameraeinrichtung der Fig. 1B aufgenommen werden kann. In dem Bild sind ein Teil eines Kopfes 30 einer Person sowie eine Brillenfassung 20 sichtbar. Zu Referenzzwecken ist an der Brillenfassung 20 ein Messbügel 35 angebracht. Auf Basis dieses Messbügels und den daran befindlichen Markierungen ergibt sich eine Linie 31. Eine Linie 34 verläuft parallel zu der Linie 31. Der Vorneigungswinkel kann dann auf Basis eines Neigungswinkels δ der Linie 31 zur Senkrechten bestimmt werden. Bei planen Brillengläsern und einer Bildaufnahme aus einer Richtung in der Glasebene der Brillengläser entspricht der Neigungswinkel δ dem Vorneigungswinkel. Bei anderen Aufnahmerichtungen, z.B. einem seitlichen Bild wie in Fig. 3 gezeigt, muss noch eine perspektivische Korrektur durchgeführt werden.

Bei einer Annotierung der vertikalen nasalen und temporalen Glasränder kann es demgegenüber zu Linien 32, 33 kommen, die nicht zu den Linien 31, 34 parallel sind und unter Neigungswinkeln γ1 bzw. γ2 zur Senkrechten stehen, die sich von dem Winkel δ unterschieden. Wegen dieses Unterschieds führt eine Berechnung des Vorneigungswinkels auf Basis des Neigungswinkel γ1 bzw. γ2 der Linie 32 oder 33 zu einem anderen (ungenauen) Vorneigungswinkel. Dies liegt im Wesentlichen daran, dass die Ränder der Brillenfassung und somit die Glasränder keine genauen Rechtecke sind, sondern der temporale und nasale vertikale Glasrand beide schräg verlaufen. In einer seitlichen Ansicht, die nicht exakt von der Seite aufgenommen wird, kommt es daher zu einer perspektivischen Verschiebung der vertikalen Glasränder gegenüber einem Glasrand, wie er bei rechteckigen Brillengläsern erscheinen würde und wie er durch den Messbügel 35 markiert wird. Auf der anderen Seite ist wie oben erläutert der Messbügel 35 nicht wünschenswert. Die Neigungswinkel γ1 bzw. γ2 sind dabei im Allgemeinen unterschiedlich, können aber je nach Verlauf des temporalen und nasalen Glasrandes auch gleich sein.

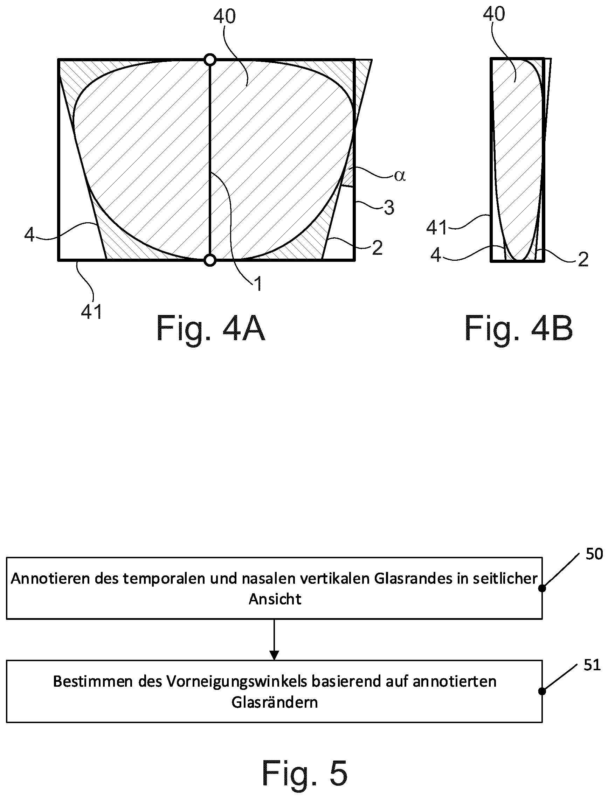

Dies wird unter Bezugnahme auf die Figuren 4A und 4B noch näher erläutert. Die Fig. 4A zeigt ein Brillenglas 40 in Frontansicht (beispielsweise aus der 0°-Richtung der Fig. 1B), und die Fig. 4B zeigt eine entsprechende seitliche Ansicht. Mit 41 ist eine Umrandung des Brillenglases entsprechend dem Kastensystem als Rechteck in der Frontansicht der Fig. 4A bezeichnet. Fig. 4B zeigt eine seitliche Ansicht, in der die Linien des Rechtecks 41 entsprechend perspektivisch verkürzt sind. Durch die schräg verlaufenden Linien wird in der Seitenansicht beispielsweise für den in Fig. 4A rechten (z.B. temporalen) Glasrand eine Linie 2 annotiert, während die senkrechte Linie korrekterweise die Linie 3 wäre, die parallel zu einer Höhe 1 des Brillenglases verläuft. Ein Winkel in der Frontansicht zwischen den Linien 2 und 3 ist mit α gekennzeichnet und wird später verwendet. Dadurch, dass die Linie 2 statt der Linie 3 annotiert wird, ergibt sich eine Verfälschung des letztendlich bestimmten Vorneigungswinkels. Ähnliches gilt, wenn eine Linie 4 entsprechend dem linken (z.B. nasalen) Glasrand annotiert wird.

Der Vorneigungswinkel wird dabei zunächst aus der Neigung der annotierten Linie 2 zur Senkrechten in einer seitlichen Ansicht wie auch in der Fig. 3 gezeigt bestimmt. Da es sich jedoch um keine exakte Seitenansicht handelt, ergibt sich zum einen ein Fehler, der auch bei Annotation der Linie 3 durch die Winkeländerung auftritt, der aber wie bereits oben erläutert und wie auch weiter unten dargelegt bei bekanntem Winkel, unter dem das seitliche Bild aufgenommen ist, aufgrund einfacher Geometrieüberlegungen korrigierbar ist, zum anderen aber auch ein Fehler dadurch, dass eben die Linie 2 statt der Linie 3 annotiert wird.

Nachfolgend diskutierte Ausführungsbeispiele erhöhen die Genauigkeit der Bestimmung des Vorneigungswinkels.

Die Fig. 5 zeigt ein Flussdiagram zur Veranschaulichung eines computerimplementierten Verfahrens gemäß einem Ausführungsbeispiel. Das Verfahren kann wie auch weitere im Folgenden beschriebene Verfahren durch eine entsprechende Programmierung der Recheneinrichtung 11 implementiert sein. Bei sämtlichen dargestellten Verfahren werden Bildaufnahmen einschließlich eines seitlichen Bildes mit einer Kameraeinrichtung, beispielsweise der Kameraeinrichtung der Fig. 1B, angefertigt.

In Schritt 50 umfasst das Verfahren ein Annotieren des temporalen und nasalen vertikalen Glasrandes in einer seitlichen Ansicht, beispielsweise eine seitlichen Ansicht wie in der Fig. 3 dargestellt. In Schritt 51 umfasst das Verfahren dann ein Bestimmen des Vorneigungswinkels basierend auf den annotierten Glasrändern. Hierzu wird bei dem Verfahren der Fig. 5 von einer Linie ausgegangen, deren Neigung zur Senkrechten ein Mittelwert der Neigungen der Glasränder ist, im Falle der Fig. 3 ein Mittelwert der Linien 32, 33 mit den Neigungswinkeln γ1 und γ2. Da die Neigungen der vertikalen Glasränder wie beispielsweise in Fig. 2 oder auch Fig. 4 gezeigt in den meisten Fällen in der Frontansicht entgegengesetzt ist, wirkt sich die perspektivische Verzerrung entgegengesetzt aus, sodass durch eine Mittelung eine Vergrößerung der Genauigkeit erzielt werden kann, wobei bei betragsmäßig unterschiedlichen Neigungen der vertikalen Glasränder ein Restfehler verbleiben kann.

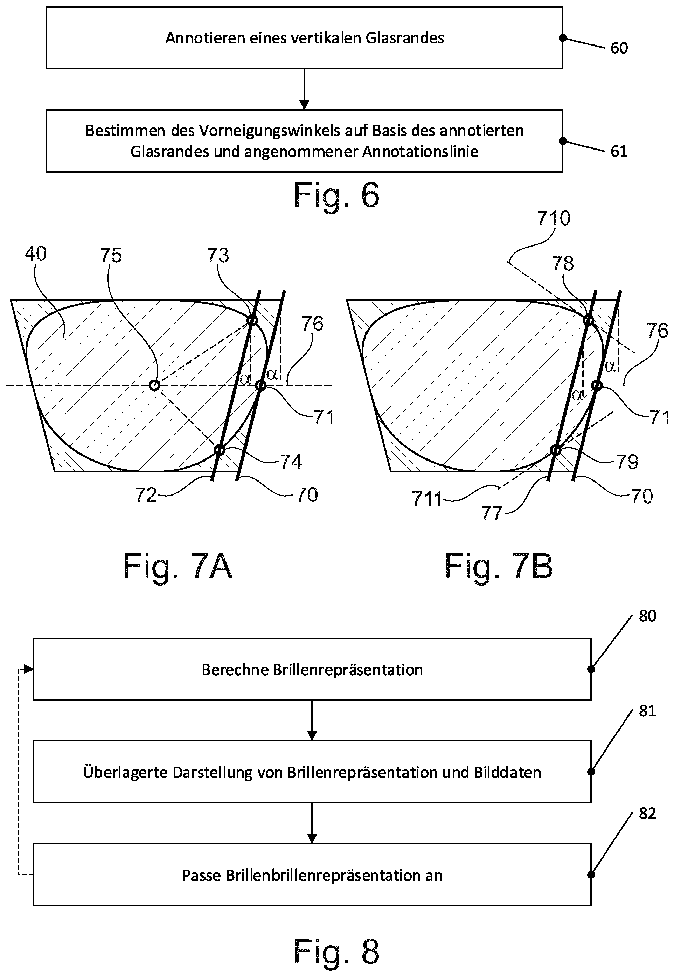

Ein Flussdiagram zur Veranschaulichung eines Verfahrens gemäß einem weiteren Ausführungsbeispiel ist in der Fig. 6 dargestellt.

In Schritt 60 der Fig. 6 wird in einem seitlichen Bild ein vertikaler Glasrand annotiert. In dem Ausführungsbeispiel der Fig. 6 kann das insbesondere ein temporaler vertikaler Glasrand sein (22A oder 22B der Fig. 2, Annotation entsprechend der Linie 32 der Fig. 3), da dieser näher an einer Kameraeinrichtung wie der Kameraeinrichtung der Fig. 1B liegt und daher auch häufig besser erkennbar ist. Bei anderen Ausführungsbeispielen kann auch der nasale Glasrand annotiert werden (21A oder 21B der Fig. 2, Annotation entsprechend der Linie 33 der Fig. 3).

In Schritt 61 wird der Vorneigungswinkel auf Basis des annotierten Glasrandes und einer angenommenen Annotationslinie bestimmt, wie dies bereits weiter oben kurz erläutert wurde und wie dies nun genauer unter Bezugnahme auf die Fig. 7 diskutiert wird.

Wie bereits eingangs erläutert ist die angenommene Annotationslinie eine Linie, von der angenommen wird, dass sie dem annotierten vertikalen Glasrand entspricht. Die Figuren 7A und 7B zeigen mögliche Beispiele für derartige Annotationslinien.

Ein erstes Beispiel für eine angenommene Annotationslinie 70 wird bestimmt, indem eine Tangente an den Glasrand durch einen Schnittpunkts 71 zwischen dem Glasrand und der horizontalen Mittellinie 76 gelegt wird. Ein zweites Beispiel einer angenommenen Annotationslinie 72 verläuft durch Schnittpunkte 73, 74 des Glasrandes mit Linien, die von dem Mittelpunkt 75 gemäß dem Kastensystem unter einem Winkel von 45° zu der horizontalen Mittellinie 76 ausgehen. Auch andere Punkte können verwendet werden, beispielsweise indem statt eines Winkels von 45° ein anderer Winkel verwendet wird. Ein drittes Beispiel einer angenommenen Annotationslinie 77 verläuft durch Punkte 78, 79 des Glasrandes, an denen Tangenten 710, 711 einen vorgegebenen Winkel, beispielsweise 45°, mit der Mittellinie 76 (oder horizontalen oder vertikalen Begrenzungslinien des Glasrandes) einschließen.

Die angenommene Annotationslinie bildet einen Winkel α mit der vertikalen Linie gemäß dem Kastensystem 41, siehe Fig. 4A. Es wird für das Verfahren dann davon ausgegangen, dass der annotierte vertikale Glasrand mit der angenommenen Annotationslinie übereinstimmt. Wird die Linie 32 der Fig. 3 als Beispiel für den annotierten vertikalen Glasrand verwendet und die angenommene Annotationslinie 70 als Beispiel für die angenommene Annotationslinie verwendet, bedeutet dies, dass die Linie 32 in dem seitlichen Bild 36 der Fig. 3 in einer Frontansicht zumindest hinsichtlich des Winkels α der angenommenen Annotationslinie 70 entspricht. Somit wird dieser Winkel α wird auch für den annotierten vertikalen Glasrand angenommen. Zusammen mit einem Winkel β, aus dem die Bildaufnahme für das seitliche Bild, in dem der vertikale Glasrand in Schritt 60 annotiert wurde, erfolgte (z.B. 85°), ergibt sich dann ein Korrekturwinkel α' = α*cos(β). Um diesen Winkel α' wird dann der Neigungswinkel des annotierten vertikalen Glasrandes (z.B. γ2 im Fall der Linie 32) korrigiert, um den Vorneigungswinkel zu erhalten. Der Term cos(β) entspricht dabei der bereits bei der Beschreibung der Fig. 3 erwähnten perspektivischen Korrektur.

Dieses Verfahren kann zusätzlich auf die nasale Annotationslinie angewandt werden. Dies ist insbesondere bei stark asymmetrischen Glasformen sinnvoll, wie bei Pilotenbrillen oder "Rechteckigen" Glasformen. In beiden Fällen ist die äußere Randkurve zwar gut durch eine vertikal verlaufende Linie im Kastensystem annäherbar, das funktioniert aber nicht bei der nasalen vertikalen Linie des Kastensystems. So verlaufen in der Fig. 2 die nasalen Glasränder 21A, 21B deutlich anders als eine vertikale Linie gemäß dem Kastensystem verlaufen wäre, während bei den temporalen Glasrändern 22A, 22B der Verlauf des Glasrandes näherungsweise vertikal ist. Wie bereits erläutert kann die angenommene Annotationslinie auch auf andere Weise bestimmt werden, beispielsweise indem ein Trapez, das das Brillenglas 40 umschreibt, mittels Bilderkennung - gegebenenfalls benutzergestützt - festgestellt wird und die Kantenlinie des Trapezes dann als angenommene Annotationslinie verwendet wird, oder indem die angenommene Annotationslinie mit Techniken des maschinellen Lernens bestimmt wird.

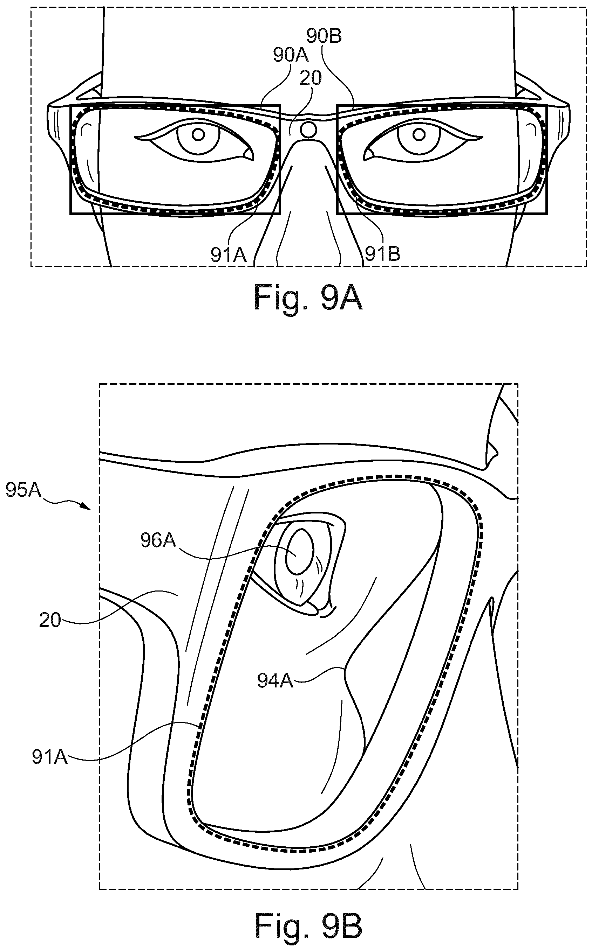

Die Fig. 8 zeigt ein Verfahren gemäß einem Ausführungsbeispiel. Die Figuren 9A bis 9D zeigen Darstellungen zur Veranschaulichung des Verfahrens der Fig. 8.

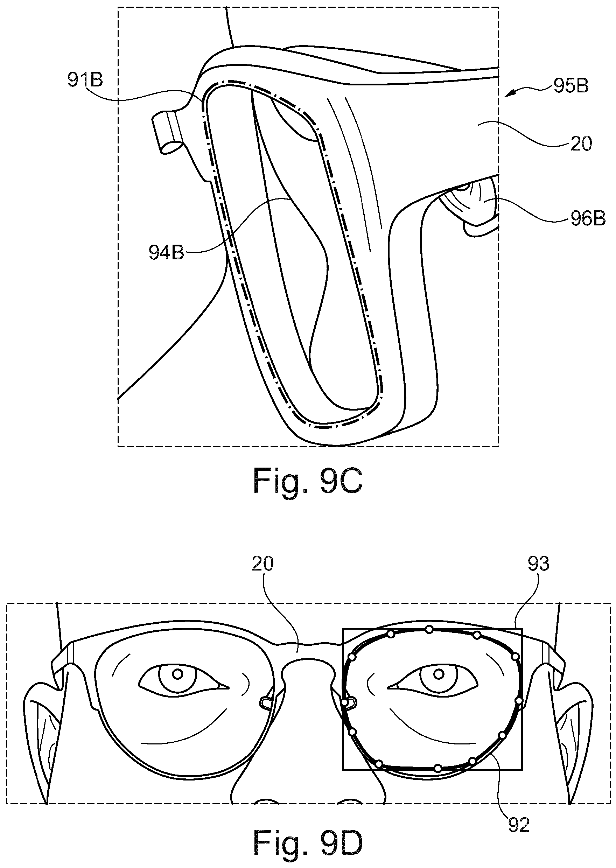

In Schritt 80 wird eine Brillenrepräsentation wie bereits oben erläutert berechnet oder anderweitig bestimmt. So werden in Fig. 9A in einem Frontbild Glasränder 91A, 91B manuell eingezeichnet, die als Repräsentation dienen können. Mit 90A bzw. 90B sind die entsprechenden Umrahmungen der Brillengläser im Kastensystem bezeichnet. Alternativ können auch Punkte auf den Glasrändern annotiert oder automatisch durch Bildverarbeitung bestimmt werden und dann z.B. mit Splines oder anderen Kurven verbunden werden, wie dies in Fig. 9D gezeigt ist, um eine Repräsentation 92 zu bilden. Mit dem Bezugszeichen 93 ist die entsprechende Umrahmung im Kastensystem bezeichnet.

In Schritt 81 wird die Brillenrepräsentation mit Bilddaten, insbesondere einem seitlichen Bild, überlagert. Dies ist in den Figuren 9B und 9C für seitliche Bilder 95A, 95B von rechts bzw. von links gezeigt. Mit den Bezugszeichen 94A und 94B sind Nasenpads der Brillenfassung bezeichnet.

In Schritt 82 wird die Brillenrepräsentation den Bilddaten angepasst, beispielsweise durch einen Benutzer. Dieses Verfahren kann wiederholt durchgeführt werden. Auf Basis der angepassten Brillenrepräsentation wird dann der Vorneigungswinkel berechnet. Wie erläutert kann die Brillenrepräsentation dabei ein Modell der Brille sein oder eine projizierte Kante entsprechend beispielsweise der Linie 71 der Fig. 7A oder Fig. 7B.

## Patentansprüche

1. Computerimplementiertes Verfahren zum Bestimmen eines Vorneigungswinkels, umfassend:
Aufnehmen mindestens eines seitlichen Bildes (36; 95A, 95B) eines Kopfes (30) einer Person, die eine Brillenfassung (20) trägt, und
Annotieren eines vertikalen Glasrandes (21A, 21B, 22A, 22B) in dem mindestens einen seitlichen Bild (36; 95A, 95B), wobei unter dem Annotieren des vertikalen Glasrandes ein Festlegen einer Linie in dem mindestens einen seitlichen Bild verstanden wird, die den vertikalen Glasrand in dem Bild kennzeichnet,
**gekennzeichnet durch**
Bestimmen des Vorneigungswinkels basierend auf einer angenommenen Annotationslinie (70, 72, 77) und dem annotierten vertikalen Glasrand (32, 33), wobei unter einer angenommenen Annotationslinie eine Annotationslinie verstanden wird, von der angenommen wird, dass sie dem annotierten vertikalen Glasrand entspricht,
wobei das Bestimmen des Vorneigungswinkels basierend auf der angenommenen Annotationslinie (70, 72, 77) und dem annotierten vertikalen Glasrand (32, 33) ein Bestimmen des Vorneigungswinkels auf Basis einer Neigung (γ1, γ2) des annotierten vertikalen Glasrande (32, 33) zur Vertikalen in dem seitlichen Bild (36; 95A, 95B) und einer Neigung (α) der angenommenen Annotationslinie (70, 72, 77) zur Vertikalen in einer Frontansicht der Brillenfassung (20) umfasst.

2. Verfahren nach Anspruch 1, weiter umfassend ein Bestimmen der angenommenen Annotationslinie aus einem Verlauf eines Glasrandes der Brillenfassung (20).

3. Verfahren nach Anspruch 2, weiterhin umfassend Bestimmen des Verlaufes des Glasrandes aus einer Frontaufnahme des Kopfes (30) der Person, die die Brillenfassung (20) trägt.

4. Verfahren nach Anspruch 2 oder 3, wobei die angenommene Annotationslinie (70) eine Tangente an einem Schnittpunkt (71) des Glasrandes mit einer horizontalen Mittellinie (76) ist.

5. Verfahren nach Anspruch 2 oder 3, wobei die angenommene Annotationslinie (72) eine Linie durch zwei Schnittpunkte (73, 74) des Glasrandes mit Linien, die unter einem vorgegebenen Winkel zu der horizontalen Mittellinie (76) von einem Mittelpunkt (75) des Brillenglases (40) gemäß dem Kastensystem ausgehen, ist, oder eine Linie durch zwei Punkte (78, 79) des Glasrandes, an denen Tangenten unter einem vorgegebenen Winkel zu der horizontalen Mittellinie (76) verlaufen, ist.

6. Verfahren nach Anspruch 1, wobei die angenommene Annotationslinie (70, 72, 77) durch maschinelles Lernen bestimmt wird.

7. Verfahren nach einem der Ansprüche 1 bis 6, wobei die angenommene Annotationslinie (70, 72, 77) basierend auf einer gekrümmten Form des Brillenglases bestimmt wird.

8. Computerprogramm mit einem Programmcode, der, wenn er auf einem Prozessor (12) einer Vorrichtung umfassend den Prozessor (12), einen Speicher (13) und eine Kameraeinrichtung (15) ausgeführt wird, bewirkt, dass das Verfahren nach einem der Ansprüche 1 bis 7 durchgeführt wird.

9. Vorrichtung, umfassend einen Prozessor (12), einen Speicher (13) und eine Kameraeinrichtung (15), wobei die Vorrichtung zur Durchführung des Verfahrens nach einem der Ansprüche 1 bis 7 eingerichtet ist.

## Claims

1. Computer-implemented method for determining a pantoscopic angle, comprising:
acquisition of at least one lateral image (36; 95A, 95B) of a head (30) of a person who is wearing a spectacle frame (20), and
annotation of a vertical lens edge (21A, 21B, 22A, 22B) in the at least one lateral image (36; 95A, 95B), wherein annotation of the vertical lens edge is understood to be the defining of a line in the at least one lateral image which identifies the vertical lens edge in the image,
**characterized by**
a determination of the pantoscopic angle on the basis of an assumed annotation line (70, 72, 77) and the annotated vertical lens edge (32, 33), an assumed annotation line meaning an annotation line which is assumed to correspond to the annotated vertical lens edge,
the determination of the pantoscopic angle on the basis of the assumed annotation line (70, 72, 77) and the annotated vertical lens edge (32, 33) comprising a determination of the pantoscopic angle on the basis of an inclination (γ1, γ2) of the annotated vertical lens edge (32, 33) with respect to the vertical in the lateral image (36; 95A, 95B) and an inclination (α) of the assumed annotation line (70, 72, 77) with respect to the vertical in a front view of the spectacle frame (20).

2. Method according to Claim 1, further comprising a determination of the assumed annotation line from a profile of a lens edge of the spectacle frame (20).

3. Method according to Claim 2, furthermore comprising determination of the profile of the lens edge from a front acquisition of the head (30) of the person who is wearing the spectacle frame (20).

4. Method according to Claim 2 or 3, wherein the assumed annotation line (70) is a tangent to a point of intersection (71) of the lens edge with a horizontal centreline (76).

5. Method according to Claim 2 or 3, wherein the assumed annotation line (72) is a line through two points of intersection (73, 74) of the lens edge with lines that originate at a predefined angle with respect to the horizontal centreline (76) from a centre (75) of the spectacle lens (40) according to the boxing system, or is a line through two points (78, 79) of the lens edge at which tangents extend at a predefined angle with respect to the horizontal centreline (76).

6. Method according to Claim 1, wherein the assumed annotation line (70, 72, 77) is determined by machine learning.

7. Method according to one of Claims 1 to 6, wherein the assumed annotation line (70, 72, 77) is determined on the basis of a curved shape of the spectacle lens.

8. Computer program having program code which, when it is run on a processor (12) of an apparatus that comprises the processor (12), a memory (13) and a camera device (15), causes the method according to one of Claims 1 to 7 to be carried out.

9. Apparatus, comprising a processor (12), a memory (13) and a camera device (15), wherein the apparatus is configured to carry out the method according to one of Claims 1 to 7.

## Revendications

1. Procédé mis en œuvre par ordinateur pour déterminer un angle d'inclinaison, comprenant :
l'acquisition d'au moins une image latérale (36 ; 95A, 95B) de la tête (30) d'une personne portant une monture de lunettes (20), et
l'annotation d'un bord de verre vertical (21A, 21B, 22A, 22B) dans ladite au moins une image latérale (36 ; 95A, 95B), l'annotation du bord de verre vertical étant comprise comme la définition d'une ligne dans ladite au moins une image latérale qui caractérise le bord de verre vertical dans l'image,
**caractérisé par**
la détermination de l'angle d'inclinaison sur la base d'une ligne d'annotation supposée (70, 72, 77) et du bord de verre vertical annoté (32, 33), une ligne d'annotation supposée étant comprise comme une ligne d'annotation qui est supposée correspondre au bord de verre vertical annoté,
la détermination de l'angle d'inclinaison sur la base de la ligne d'annotation supposée (70, 72, 77) et du bord de verre vertical annoté (32, 33) comprenant la détermination de l'angle d'inclinaison sur la base d'une inclinaison (γ1,γ2) du bord de verre vertical annoté (32, 33) par rapport à la verticale dans l'image latérale (36 ; 95A, 95B) et d'une inclinaison (α) de la ligne d'annotation supposée (70, 72, 77) par rapport à la verticale dans une vue de face de la monture de lunettes (20) .

2. Procédé selon la revendication 1, comprenant en outre la détermination de la ligne d'annotation supposée à partir d'un tracé d'un bord de verre de la monture de lunettes (20).

3. Procédé selon la revendication 2, comprenant en outre la détermination du tracé du bord de verre à partir d'une vue de face de la tête (30) de la personne portant la monture de lunettes (20).

4. Procédé selon la revendication 2 ou 3, dans lequel la ligne d'annotation supposée (70) est une tangente en un point d'intersection (71) du bord de verre avec une ligne médiane horizontale (76).

5. Procédé selon la revendication 2 ou 3, dans lequel la ligne d'annotation supposée (72) est une ligne passant par deux points d'intersection (73, 74) du bord de verre avec des lignes qui partent d'un point central (75) du verre de lunettes (40) selon le système de la boîte, sous un angle prédéfini par rapport à la ligne médiane horizontale (76), ou est une ligne passant par deux points (78, 79) du bord de verre où des tangentes s'étendent sous un angle prédéfini par rapport à la ligne médiane horizontale (76).

6. Procédé selon la revendication 1, dans lequel la ligne d'annotation supposée (70, 72, 77) est déterminée par apprentissage automatique.

7. Procédé selon l'une des revendications 1 à 6, dans lequel la ligne d'annotation supposée (70, 72, 77) est déterminée sur la base d'une forme incurvée du verre de lunettes.

8. Programme informatique comportant un code de programme qui, lorsqu'il est exécuté sur un processeur (12) d'un dispositif comprenant le processeur (12), une mémoire (13) et un dispositif de caméra (15), a pour effet de mettre en œuvre le procédé selon l'une des revendications 1 à 7.

9. Dispositif comprenant un processeur (12), une mémoire (13) et un dispositif de caméra (15), le dispositif étant conçu pour mettre en œuvre du procédé selon l'une des revendications 1 à 7.
